# EUROPEAN PATENT SPECIFICATION

(11) **EP 3 611 928 B1**
(45) Date of publication and mention of the grant of the patent: **22.06.2022**
(21) Application number: 18189248.0
(22) Date of filing: 16.08.2018
(51) Int. Cl.: H04N 21/647, H04N 21/234, H04H 20/12

(54) **APPARATUS AND METHOD FOR CONFIGURING A MONITORING DEVICE, SYSTEM FOR MONITORING A STREAMING OR BROADCAST SERVICE**
VORRICHTUNG UND VERFAHREN ZUR KONFIGURATION EINER ÜBERWACHUNGSVORRICHTUNG, SYSTEM ZUR ÜBERWACHUNG EINES STREAMING- ODER RUNDFUNKDIENSTES
APPAREIL ET PROCÉDÉ POUR CONFIGURER UN DISPOSITIF DE SURVEILLANCE, SYSTÈME DE SURVEILLANCE D'UN SERVICE DE DIFFUSION OU DE DIFFUSION EN CONTINU

(43) Date of publication of application: 19.02.2020
(73) Proprietor: Rohde & Schwarz GmbH & Co. KG, 81671 München (DE)
(72) Inventor: SCHMID, Björn, 81371 München (DE); RUOFF, Marcus, 12437 Berlin (DE)
(74) Representative: Isarpatent

(56) References cited:
- WO-A1-2012/136260
- GB-A- 2 372 892
- US-A1- 2018 152 474

## Description

### TECHNICAL FIELD

The present invention relates to an apparatus and a method for configuring a monitoring device. In particular, the present invention relates to configuring a monitoring device for monitoring a streaming or broadcast service. Further, the present invention relates to a system for monitoring a streaming or broadcast service.

### BACKGROUND

GB 2372892 A describes an adaptive fault detection and localization in television distribution networks using digital signal processing. The system comprises an error detector receiving an input channel and outputting an error signal to a fault evaluator.

US 2018/0152474 A1 describes a method for configuring a network monitoring device. One or more performance metrics associated with one or more thresholds to be configured are received from a user. Historical network traffic flow information associated with a previously detected malicious activity is analyzed to identify characteristic values for the one or more performance metrics.

Although applicable to the monitoring of any kind of data stream, the present invention and its underlying problem will be hereinafter described in combination with monitoring a video data stream.

Video data may be provided by a digital data stream in streaming or broadcast systems. To ensure an appropriate quality of such a service, the data stream may be monitored in order to quickly detect an error in the broadcast service. For this purpose, a monitoring device for monitoring the data stream has to be setup depending on characteristics of the content of the data stream, for example depending on the content of the video stream.

For example, a video stream relating to a transmission of a sport event may comprise dynamic video content. Accordingly, a short sequence of still video content may be an indication of a failure. However, another type of video content may comprise longer sequences of still images. For example, a transmission of news may comprise a longer sequence showing a map or a still image of a person. Thus, a threshold for detecting errors with respect to a duration of still images has to be set to a different value depending on the type of a transmission.

Accordingly, a user manually has to set the threshold value for detecting errors depending on the type of the service, for example a lower value for dynamic sport transmission, and a higher value for news or the like.

Against this problem, an object of the present invention is to provide an improved configuration of a monitoring device for monitoring a streaming or broadcast service.

### SUMMARY

The present invention solves this object by the features of the independent claims. Further embodiments are subject matter of the dependent claims.

According to a first aspect, an apparatus for configuring a monitoring device is provided. The monitoring device may be configured to monitor a streaming or broadcast service. The apparatus for configuring the monitoring device comprises a receiving device, a channel type detector, an analyzing device and a configuration device. The receiving device is adapted to receive a data stream of the streaming or broadcast service. The channel type detector is adapted to determine a type of the streaming or broadcast service. The analyzing device is adapted to compute a distribution of at least one error parameter over a predetermined time period in the received data stream of the streaming of broadcast service. The analyzing device is further adapted to determine a threshold value for the at least one error parameter. The threshold value is determined based on the computed distribution of the at least one error parameter over the predetermined time period. The configuration device is adapted to set a configuration of the monitoring device. In particular, the configuration of the monitoring device is set based on the determined threshold value for the at least one error parameter and the determined type of the streaming or broadcast service.

According to a further aspect, a system for monitoring a streaming or broadcast service is provided. The system comprises an apparatus for configuring a monitoring device according to the first aspect and a monitoring device. The monitoring device is adapted to detect an alarm in the received data stream of the streaming or broadcast service upon an error parameter in the received data stream exceeds the determined threshold value for the at least one error parameter.

According to a still further aspect, a method for configuring a monitoring device is provided. The monitoring device may be configured to monitor a streaming or broadcast service. The method comprises a step of receiving a data stream of the streaming or broadcast service. The method further comprises determining a type of the streaming or broadcast service. The method comprises further computing a distribution of at least one error parameter over a predetermined time period in the received data stream of the streaming of broadcast service. Further, the method comprises determining a threshold value for the at least one error parameter. The threshold value may be determined based on the computed distribution of the at least one error parameter over the predetermined time period. Finally, the method comprises configuring the monitoring device. The configuration of the monitoring device may be performed based on the determined threshold value for the at least one error parameter and the determined type of the streaming or broadcast service.

The present invention is based on the fact that at least some error parameters of a broadcast or streaming service may change depending on a type of the respective service. For example, a video service relating to dynamic video content may comprise only still sequences with a relative short time period. However, video content of another type of a service may comprise still sequences with a longer time period. The same observation may be also valued for services of audio signals or other data streams such as subtitles or teletext information.

Thus, the present invention aims to take into account this fact and provide an improved configuration for monitoring a streaming or broadcast service. In particular, the present invention aims to provide a dynamical configuration for monitoring a streaming or broadcast service depending on the type of the streaming or broadcast service. In this connection the expression "type" may specify a type of a service. For example the type may specify a type out of a number of predetermined service types. The type may relate or characterize to the content of the service.

It is for this purpose that the present invention acquires a distribution of an error parameter over the time. In particular, an individual distribution of the error parameter over the time may be acquired for different types of streaming or broadcast services. This distribution of one or more error parameters over the time for a particular type of streaming or broadcast service may be analyzed in order to determine an appropriate threshold value. For example, the threshold value may specify a value which is a limit for detecting an abnormal situation. If an error value exceeds such a threshold value, a monitoring device may detect an abnormal situation and output an alarm signal.

However, it is understood that even more than one threshold value for an error parameter may be computed. For example, multiple threshold values may be provided for realizing a multilevel alarm system. In a first level, when the error parameter exceeds a first threshold, a first alarm signal may be provided. For example, the first alarm signal may be an optical signal. If the error parameter exceeds a further, higher threshold value, a second alarm signal may be provided. For example, the second alarm signal may be an acoustical alarm signal. However, any other kind of multistage signaling may be also applied. A value of an error parameter may specify a time period of still/unchanged content.

As already described above, separate threshold values may be computed for separate types of the streaming or broadcast service. For example, a type of a streaming or broadcast service may be specified in the data of the streaming or broadcast service. It may be possible that the data comprise a packet or a particular field in a packet for specifying a type of the streaming or broadcast service. Furthermore, the type of the streaming or broadcast service may be also specified by a separate communication link. It may be also possible that the type of the streaming or broadcast service may be specified by a user. Alternatively, it may be also possible that the type of the streaming or broadcast service may be selected depending on the source from which the respective service is provided. However, it is understood that any other kind of scheme for determining the type of the streaming or broadcast service may be also possible.

The error parameter may be any kind of appropriate parameter for specifying or identifying an error in the streaming or broadcast service. As already described above, the error parameter may be, for example a still period. Such a still period may be, a time period in which the image of a video sequence does not change. Accordingly, the error parameter may also relate to a time period with no audio signal, an audio signal below a predetermined threshold or an overload, i.e. an audio signal exceeding an upper limit. Furthermore, the error value may also relate to a time period without a teletext signal, without subtitle, or with teletext data or subtitles maintaining unchanged over a specific period of time. However, it is understood that any other kind of error parameter may be also taken into account. For example, the error parameter may also relate to sequences of super bright images, dark images, etc.

The computed distribution of an error parameter over the time may specify, for example, a statistical analysis of the error parameter over the time. For example, it may be possible to determine a maximum value of the error value within a predetermined time period, an average value of the respective error parameter, a Gaussian distribution of the error parameter, or any other kind of analysis of the error parameter over the predetermined time period. Based on this distribution of the error para66meter over the time, an appropriate threshold for monitoring the streaming or broadcast service may be determined. For example, the threshold value may be determined with respect to the average or maximum value which has been detected during the predetermined time period. For example, it may be possible to add an additional value to the standard deviation of the Gaussian distribution. However, it is understood that any other appropriate scheme for determining the threshold value based on the distribution of the error parameter may be also applied.

The predetermined time period for analyzing the error parameter may be any appropriate time period with respect to the content of the streaming or broadcast service. For example, the time period may be in a range of 15, 30 minutes, 1 hour, 2 hours, 4 hours, 6 hours, 12 hours, 24 hours, 2 days, 1 week, etc. However, any other appropriate time period may be also applied. Furthermore, it may be also possible to apply a first stage a shorter period of time for obtaining a first threshold value. In a further stage, a longer period of time may be taken into account for enhancing the accuracy of the threshold value. Furthermore, the threshold value may be dynamically adapted by continuously monitoring the streaming or broadcast service.

The determined threshold value for the respective error parameter may be provided to the monitoring device. In particular, an appropriate threshold value may be determined with respect to the corresponding type of the streaming or broadcast service. In this way, the monitoring of the streaming or broadcast service can be adapted depending on the respective type of the streaming or broadcast service.

By providing individual settings for configuring the monitoring device depending on the type of the streaming or broadcast service, the reliability of the monitoring can be improved. Furthermore, by automatically determining appropriate threshold values for configuring the monitoring device based on an analysis of a distribution of an error parameter over the time, it is possible to obtain appropriate configuration data. Thus, a user can be assisted for determining appropriate configuration settings. Hence, the configuration of the monitoring device can be simplified, and the reliability of the monitoring result is improved.

Further embodiments of the present invention are subject of the further subclaims and of the following description referring to the drawings.

In a possible embodiment, the at least one error parameter comprises an error parameter of a video stream, an audio stream and/or a data stream. In particular the data stream may be a data stream of a subtitle and/or a teletext.

For example, the error parameter of a video stream may relate to a time period of a still sequence, i.e. a sequence in which the content of the image does not change. Furthermore, the error parameter may also relate to a time period of dark images, in particular unusually dark images, or super bright images. An error parameter of an audio stream may relate to a time period of silence, an audio signal below a specific threshold or an audio overload, i.e. an audio signal having a magnitude greater than a predetermined limit. Furthermore, the error parameter may specify a time period of a data stream having particular properties, for example a time period of a data stream without content or a time period wherein the data stream comprises the same data. For example, if the data stream relates to subtitle or teletext data, it may be observed whether or not the data stream comprises subtitles or teletext data, or whether the data stream comprises same subtitle or teletext data for a specific time period.

In a possible embodiment, the at least one error parameter comprises a time period without changes in the content of the streaming or broadcast service.

A time period without changes may be an indication of a failure. For example, a signal source of the streaming or broadcast service may be disconnected or may have a failure. Furthermore, an encoder for the data stream may break down or any other kind of failure may occur. Thus, a signal maintaining for a longer time period may be an indication for a failure. However, as already described above, depending on the content, i.e. the type of the service, an acceptable time period for the same content may be variable.

The channel type detector may be adapted to determine the type of the streaming or broadcast service based on data included in the received data stream of the streaming or broadcast service.

For example, the data of the streaming or broadcast service may be provided by data packets. In such a case, each data packet may comprise an indication of the respective type. Furthermore, it may be also possible to provide an appropriate indication of the respective type within appropriate time intervals. However, any other appropriate scheme for indicating the type of a service of the data stream may be also possible.

Alternatively, it may be also possible to provide the type of the respective service by a separate indication. For example, the type of the service may be determined depending on the signal source providing the respective streaming or broadcast service. Furthermore, it may be possible that the type of service may be manually provided by a user.

In a possible embodiment, the configuration device may be adapted to automatically set the configuration of the monitoring device. In particular, the configuration of the monitoring device may be set based on the computed threshold value of the at least one error parameter. Additionally, the respective type of the service is taken into account when automatically setting the configuration of the monitoring device.

By automatically configuring the monitoring device based on the determined threshold value, it is possible to adapt the configuration of the monitoring device based on the current streaming or broadcast service without any user impact. Thus, appropriate settings for the monitoring device can be achieved in a convenient manner without any manual user action.

In a possible embodiment, the apparatus for configuring the monitoring device may comprise a user interface. The user interface may be adapted to receive a user input for approving or modifying the computed threshold value of the at least one error parameter.

For example, the user interface may provide the computed threshold value to a user on a display. The user may accept this provided threshold value. For example, the user interface may further comprise an input interface for receiving an acknowledgment of the user to accept the proposed threshold value. Furthermore, the user interface may also provide an input device for modifying the provided suggestion of the computed threshold value. Accordingly, the user can manually increase or decrease the computed threshold value. Upon the user has approved the proposed or the modified threshold value, the respective threshold value may be used for configuring the monitoring device.

In a possible embodiment, the analyzing device may be adapted to further update the computed distribution of the at least one error parameter over the time after an initial distribution of the at least one error parameter has been computed for the predetermined time period.

The analyzing device may continuously update the distribution of the error parameters. Thus, as along as data of a streaming or broadcast service relating to the same type are received, the distribution of the error parameter may be continuously updated and the updated distribution of the error parameter may be used as a basis for refreshed threshold values. In this way, the accuracy of the threshold value can be continuously improved by further analyzing the error parameter.

In a possible embodiment, the analyzing device may be adapted to determine a threshold value for the at least one error parameter based on multiple data streams of a same type of the streaming or broadcast service.

As already explained above, the threshold value for configuring the monitoring device is determined based on the corresponding type of the streaming or broadcast service. Accordingly, it may be considered that the same or at least similar types of streaming or broadcast services may have same threshold values. Thus, by taking into account multiple services of a same or at least similar type, a larger database can be achieved. Consequently, the accuracy of the threshold value can be improved and/or the time period for determining an appropriate threshold value can be reduced.

In a possible embodiment, the apparatus for configuring a monitoring device may comprise a memory. The memory may be adapted to store the determined threshold value for the at least one error parameter. In particular, the determined threshold value may be stored in association with the corresponding type of the streaming or broadcast service.

The memory may be any kind of appropriate memory. For example, the memory may be a nonvolatile or a volatile memory. By storing the determined threshold values for a corresponding type of a streaming or broadcast service, the respective threshold values may be used for further configuration of the monitoring device. Thus, the monitoring device can be configured based on the stored threshold values upon a type of streaming of broadcast service is detected. In this way, the initial analysis of the distribution of the error parameter can be omitted, and an appropriate configuration of the monitoring device can be achieved immediately after determining the type of a service.

In a possible embodiment, the configuration device is adapted to set the configuration of the monitoring device based on a same threshold value for a same type of the streaming or broadcast service.

Accordingly, if an appropriate threshold value for a type of the streaming or broadcast service has been already computed, such a threshold value may be applied without an initial determination of the distribution of the error parameter. In particular, it may be possible to determine groups of similar types of services which may relate to a common threshold value. For example, the groups of same or similar streaming services may be pre-stored in an appropriate memory of the apparatus for configuring the monitoring device.

In a possible embodiment, the configuration device may be adapted to modify the configuration of the monitoring device, when the type of the streaming or broadcast service has changed.

Accordingly, upon the type of streaming or broadcast service changes, the configuration device may adapt the configuration of the monitoring device accordingly. In case it has been already determined an appropriate threshold value, the previously determined threshold value relating to a current type of the streaming or broadcast service may be used for configuring the monitoring device. Otherwise, if no appropriate threshold value is available, the apparatus may start a computation of an appropriate threshold value by the analyzing device.

In a possible embodiment of the system for monitoring the streaming or broadcast service, the apparatus for configuring the monitoring device and the monitoring device may be arranged in a same housing.

By including the configuration of the monitoring device in the housing of the monitoring device, a volume-efficient configuration of the system can be achieved. In particular, the apparatus for configuring the monitoring device and the monitoring device may use a same receiving device for receiving the data stream and same device for analyzing the error parameters.

In an alternative embodiment, at least one device of the apparatus for configuring the monitoring device may be arranged outside the housing of the monitor device.

For example, an analysis of the error parameters and/or a computation of an appropriate threshold value for the error parameter may be performed by an external computing device. For example, the computation may be performed in a cloud or the like.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of a transmission system applying a system for monitoring a service according an embodiment of the present invention;
- Fig. 2: shows a block diagram of system for monitoring a streaming or broadcast service according an embodiment of the present invention;
- Fig. 3: shows a block diagram of an apparatus for configuring a monitoring device according an embodiment of the present invention; and
- Fig. 4: shows a block diagram of an embodiment of a method according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

### DETAILED DESCRIPTION OF THE DRAWINGS

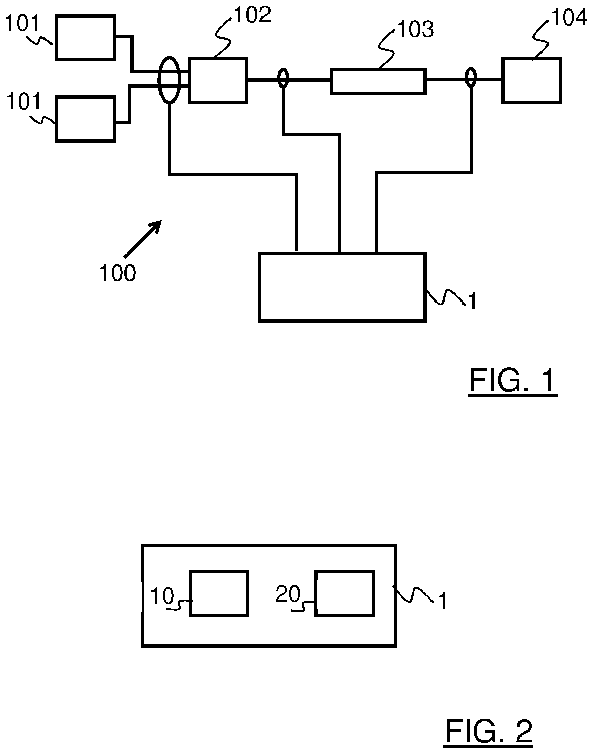

Fig. 1 shows a block diagram of a streaming or broadcast system 100. The streaming or broadcast system 100 may be monitored by a system 1 for monitoring a streaming or broadcast service. The streaming or broadcast system 100 may comprise a number of one or more sources 101 providing content to be transmitted by the streaming or broadcast system 100. For example, the sources 101 may provide audio and/or video streams. The audio and/or video streams may be provided, for example by a studio or a playout service. The audio and/or video streams may be provided to an encoder 102 for encoding the audio and/or video streams to appropriate data streams. Furthermore, additional data, for example subtitles and/or teletext data may be also provided to encoder 102, and the additional data may be encoded together with the audio/video data in a common data stream or provided as separate data streams. The encoded data provided by encoder 102 may be transmitted by a number of one or more transmission channels 103. A number of one or more decoders 104 may receive the data streams and decode the received data streams to provide the respective content.

To ensure a reliable quality of the streaming or broadcast services, the data streams may be monitored by a system 1 for monitoring the streaming or broadcast services. The monitoring of the streaming or broadcast services may be performed at any appropriate stage of the transmission. As can be seen, for instance in Fig. 1, the monitoring may be applied before providing the content to encoder 102. Furthermore, the monitoring may be performed at the output of encoder 102 or any other position at the transmission channel 103 up to the input of the decoder 104. By monitoring the streaming or broadcast service, it may be possible to detect a failure in the respective service. Upon detecting such a failure, an alarm signal may be provided. Based on this alarm signal, an automatic analysis may be applied. Additionally or alternatively, a user may be informed by the alarm signal in order to perform an appropriate action in order to rectify the failure.

Fig. 2 shows a block diagram of a system 1 for monitoring a streaming or broadcast service according to an embodiment. The system 1 comprises a monitoring device 20 and an apparatus 10 for configuring the monitoring device 20. Monitoring device 20 may analyze a data stream of a streaming or broadcast service. In particular, monitoring device 20 may determine a number of or more error parameters and compare the determined error parameters with appropriate threshold values. If at least one of the error parameters exceeds a specified threshold value, an alarm signal may be provided. The alarm signal may be an optical or an acoustical signal. Furthermore, any other appropriate electronical signal may be provided.

For example, monitoring device 20 may analyze the data stream of the streaming or broadcast service in order to determine a time period of a still sequence. For example, a still sequence may be a sequence in a video stream wherein the content of the video images maintains, i.e., the content does not change for a period of time. Furthermore, a period of time may be determined in which the image data are unusually dark or super bright. However, any other parameter for evaluating the image data of the streaming or broadcast service may be also possible. Furthermore, audio data of the streaming or broadcast service may be evaluated in order to determine a period of time in which the audio signal comprises silence, i.e. no audio signal is available, the audio signal is below a predetermined threshold value, or the audio signal is overshoot, i.e. above a predetermined limit. It may be also possible to determine a period of time during which no additional data, such as subtitles or teletext data, are provided in a video data stream. For example, a period of time may be determined in which no additional data are transmitted, or a period of time in which the provided data do not change, i.e. the provided subtitle or the teletext data maintain the same.

If the monitoring device 20 detects that the determined error parameter exceeds a predetermined threshold value, e.g. there is a still sequence longer than a predetermined period of time, an alarm signal may be provided.

However, depending on the content of the respective streaming or broadcast service, different threshold values have to be taken into account. For example, a transmission of a sport event comprising high dynamic video content may have only very short sequences of still images. On the other hand, another type of a service, for example a news feed or the like may comprise video sequences with a constant video content over a longer time period. Accordingly, a threshold value for detecting an alarm by the monitoring device 20 has to be adapted depending on the type of the streaming or broadcast service. For this purpose, the configuration of the monitoring device 20 is adapted by the apparatus 10 for configuring the monitoring device 20 accordingly.

Apparatus 10 for configuring the monitoring device 20 may analyze the data of the streaming or broadcast service and provide appropriate threshold values to the monitoring device 20. In particular, the analysis of the data and the determination of the appropriate threshold values by apparatus 10 is performed depending on the type of the streaming or broadcast service. The operation of the apparatus 10 for configuring the monitoring device 20 is described in more detail below.

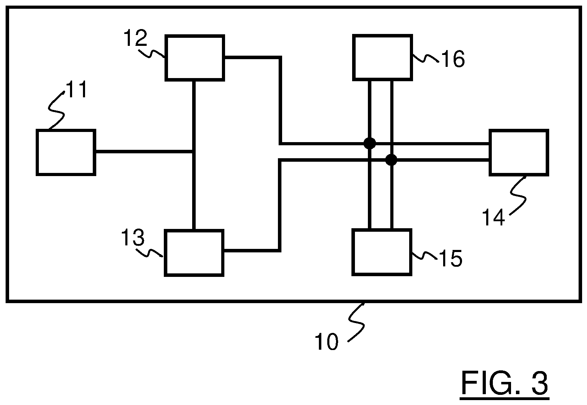

Fig. 3 shows a block diagram of apparatus 10 for configuring a monitoring device 20. Apparatus 10 comprises a receiving device 11, a channel type detector 12, an analyzing device 13 and a configuration device 14. Receiving device 11 may receive a data stream of a streaming or broadcast service. Even though the following description is made for a single data stream of a streaming or broadcast service, the present invention may be also applied to multiple data streams, i.e. a number of two or more data streams, in parallel. The received data stream may be a data stream of a video and/or audio transmission. Furthermore, the data stream may comprise additional data, such as subtitles and/or teletext data. However, it is understood that any other kind of data may be also included in the data stream.

Channel type detector 12 may determine a type of the data stream of the streaming or broadcast service which is received by the receiving device. For example, channel type detector 12 may analyze the received data stream in order to determine the respective type based on the data included in the data stream. For example, the received data stream may comprise data packets including an indication for the respective type. However, it is understood that any other appropriate scheme for determining the type of the streaming or broadcast service may be also possible. For example, the corresponding type may be provided by a separate signaling to the channel type detector 12. It may be also possible that channel type detector 12 may determine the type of the streaming or broadcast service depending on the source providing the streaming or broadcast service. Furthermore, it may be also possible that the indication of the respective type may be provided to the channel type detector 12 by a manual input of a user.

Analyzing device 13 may analyze the received data stream of the streaming or broadcast service in order to compute a distribution of one or more error parameters over the time. For example, analyzing device 13 may determine the periods of time during which the content of the data stream of the streaming or broadcast service does not change. However, it is also possible to consider any other appropriate parameter and to determine the period of time during which the respective error parameter maintains. As already mentioned above, it may be possible to consider periods of unusual dark sequences, super bright sequences, silent audio data or periods with no or unchanged data in a data stream. The evaluation of the error parameter over the time is performed for a predetermined time period. For example, the evaluation may be performed for a period of minutes, e.g. 15 or 30 minutes, 1 or multiple hours or even days. The distribution of the error parameter over the time is performed for data of streaming or broadcast service relating to a specific type, in particular a type which has been determined by the channel type detector 12.

After determining the distribution of the error parameter over the time, analyzing device 13 may determine an appropriate threshold value for the respective error parameter. For example, a statistical analysis may be performed of the distribution of the error parameters. It may be possible to determine a maximum value of the distribution for a period of time in which no error has been occurred, or to consider an average value and to add a specific value to this average value for determining the threshold value of the respective error parameter. For example, it may be possible to double the average value or to apply any other scheme for determining the appropriate threshold value.

After an appropriate threshold value for an error parameter has been determined, configuration device 14 may configure monitoring device 20 accordingly, For this purpose, configuring device 14 may set the determined threshold value in the monitoring device 20 as long as the corresponding type of the streaming or broadcast service is monitored by the monitoring device 20.

Further to the initial determination of an appropriate threshold value as described above, analyzing device 13 may perform a continuous analysis of the error parameter in order to further enhance the data basis for the distribution of the error parameter over the time. Accordingly, the distribution of the error parameter may be continuously updated and the threshold value of the respective error parameter may be adapted accordingly. In this way, the updated threshold value may be provided to the monitoring device 20. For example, the update may be performed within predetermined time intervals, for example an hour, two hours, six hours, twelve hours, one day, etc.

In the above described embodiment, the configuration of the monitoring device 20 based on the determined threshold value for an error parameter may be applied automatically. In this way, no additional action of a user has to be applied for configuring monitoring device 20.

Furthermore, it may be possible that the threshold value for an error parameter has to be approved by a user before applying the threshold value to the monitoring device. For this purpose, the apparatus 10 may further comprise a user interface 16. User interface 16 may include a display for providing the determining threshold value to a user. Furthermore, user interface 16 may comprise an input device for receiving a user input of the user. For example, a user may approve the determined threshold value by the input device, and the approved threshold value is applied to the monitoring device 20.

It may be further possible that the user may adapt the provided threshold value of an error parameter. For example, the user increase or decrease the provided threshold value, and subsequently, the modified threshold value may be used for configuring the monitoring device 20.

Furthermore, apparatus 10 may comprise a memory 15 for storing the determined threshold values relating to a corresponding type of the streaming or broadcast service. In this way, the determined threshold value can be stored in memory 15 in association with the corresponding type of the streaming or broadcast service. Upon a new type of the streaming or broadcast service has been detected by channel type detector 12, configuring device 14 may refer to memory 15. If an appropriate threshold value for the current type is already stored in memory 15, the stored threshold value may be used for configuring the monitoring device 20. Otherwise, a new threshold value may be determined by analyzing device 13 as described above.

Furthermore, it may be possible to use a same threshold value for a number of two or more similar types of streaming or broadcast services. For example, similar streaming or broadcast services may be specified and advance, and accordingly, only a single, common threshold value may be computed for all types of a streaming or broadcast service relating to a common group.

As shown in Fig. 2 above, the determination of the threshold value, the configuration of the monitoring device 20 and the monitoring of the streaming or broadcast service may be all realized in a single device. In this way, a very compact and efficient device can be achieved. However, it may be also possible that at least some of the operations may be performed by external devices. For example, the determination of the error parameters, computation of the distribution of the error parameters over the time and/or the determination of the threshold value for an error parameter can be also computed by external devices, for example a cloud computing device or the like. However, any other appropriate scheme for outsourcing some of the computational operations may be also possible.

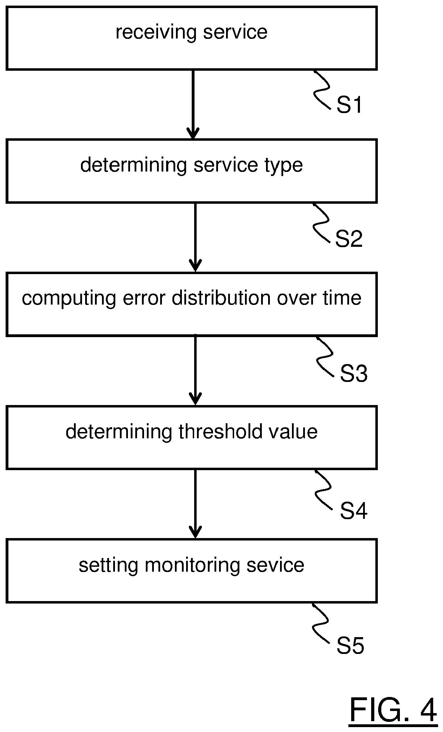

For sake of clarity in the following description of the method based on Fig. 4 reference signs used above in the description based on Figs. 1 to 3 will be maintained.

Fig. 4 shows a block diagram of a method for configuring a monitoring device 20, in particular a monitoring device 20 for monitoring a streaming or broadcast service. The method comprises a step S1 of receiving a data stream of the streaming or broadcast service. The receiving may be performed by a receiving device 11. In a step S2 a type of the streaming or broadcast service is determined. The determination of the type may be performed, for example by a channel type detector 12. In step S3 the distribution of at least one error parameter over a predetermined time period in the received data stream of the streaming or broadcast service is computed. In step S4 a threshold value for the at least one error parameter based on the computed distribution of the at least one error parameter over the predetermined time period is determined. In step S5, the monitoring device 20 is configured based on the determined threshold value for the at least one error parameter and the determined type of the streaming or broadcast service.

Furthermore, the method may comprise any appropriate step for performing operations as described above in connection with apparatus 10 for configuring the monitoring device 20.

Summarizing, the present invention relates to a configuration of a monitoring device for monitoring a streaming or broadcast service. A threshold value for monitoring a streaming or broadcast service is dynamically adapted. For this purpose, a streaming or broadcast service is analyzed to determine a distribution of an error parameter over the time. Based on the determined distribution of the error parameter an appropriate threshold value of the error value is determined for monitoring the streaming or broadcast service. The threshold value is determined separately for each type of the streaming or broadcast service.

## Claims

1. An apparatus (10) for configuring a monitoring device (20), the monitoring device (20) being configured to monitor a streaming or broadcast service, the apparatus (10) comprising:
a receiving device (11) adapted to receive a data stream of the streaming or broadcast service;
a channel type detector (12) adapted to determine a type of the streaming or broadcast service, wherein the determined type characterizes content of the streaming or broadcast service;
an analyzing device (13) adapted to compute a distribution of at least one error parameter over a predetermined time period in the received data stream of the streaming or broadcast service, and to determine a threshold value for the at least one error parameter based on the computed distribution of the at least one error parameter over the predetermined time period; and
a configuration device (14) adapted to set a configuration of the monitoring device based on the determined threshold value for the at least one error parameter and the determined type of the streaming or broadcast service,
**characterized in that**
the channel type detector (12) is adapted to analyze the received data stream and determine the type of the streaming or broadcast service based on data included in the received data stream of the streaming or broadcast service.

2. The apparatus (10) according to claim 1, wherein the at least one error parameter comprises an error parameter of a video stream, an audio stream and/or a data stream, in particular a data stream of a subtitle and/or a teletext.

3. The apparatus (10) according to claim 1 or 2, wherein the at least one error parameter comprises a time period without changes in the content of the streaming or broadcast service.

4. The apparatus (10) according to any of claims 1 to 3, wherein the configuration device (14) is adapted to automatically set the configuration of the monitoring device (20) based on the computed threshold value of the at least one error parameter.

5. The apparatus (10) according to any of claims 1 to 3, comprising a user interface (16) adapted to receive a user input for approving or modifying the computed threshold value of the at least one error parameter.

6. The apparatus (10) according to any of claims 1 to 5, wherein the analyzing device (13) is adapted to further update the computed distribution of the at least one error parameter over the time after an initial distribution of the at least one other parameter has been computed for the predetermined time period.

7. The apparatus (10) according to any of claims 1 to 6, wherein the analyzing (13) device is adapted to determine a threshold value for the at least one error parameter based on multiple data streams of a same type of the streaming or broadcast service.

8. The apparatus (10) according to any of claims 1 to 7, comprising a memory (15) adapted to store the determined threshold value for the at least one error parameter in association with the corresponding type of the streaming or broadcast service.

9. The apparatus (10) according to any of claims 1 to 8, wherein the configuration device (14) is adapted to set the configuration of the monitoring device (20) based on a same threshold value for a same type of the streaming or broadcast service.

10. The apparatus (10) according to any of claims 1 to 9, wherein the configuration device (14) is adapted to modify the configuration of the monitoring device (20), when the type of the streaming or broadcast service has changed.

11. A system (1) for monitoring a streaming or broadcast service, comprising:
an apparatus (10) for configuring a monitoring device according to any of claims 1 to 10, and
a monitoring device (20) adapted to detect an alarm in the received data stream of the streaming or broadcast service upon an error parameter in the received data stream exceeds the determined threshold value for the at least one error parameter.

12. The system (1) according to claim 11, wherein the apparatus (10) for configuring the monitoring device and the monitoring device (20) are arranged in a same housing.

13. The system (1) according to claim 11, wherein at least one device of the apparatus (10) for configuring the monitoring device is arranged outside a housing of the monitor device (20), in particular the at least one device is located in a cloud.

14. A method for configuring a monitoring device (20), the monitoring device (20) being configured to monitoring a streaming or broadcast service, the method comprising:
receiving (S1) a data stream of the streaming or broadcast service;
determining (S2) a type of the streaming or broadcast service, wherein the determined type characterizes content of the streaming or broadcast service;
computing (S3) a distribution of at least one error parameter over a predetermined time period in the received data stream of the streaming or broadcast service;
determining (S4) a threshold value for the at least one error parameter based on the computed distribution of the at least one error parameter over the predetermined time period; and
configuring (S5) the monitoring device (20) based on the determined threshold value for the at least one error parameter and the determined type of the streaming or broadcast service,
**characterized in that**
determining (S2) the type of the streaming or broadcast service comprises analyzing the received data stream and determining the type of the streaming or broadcast service based on data included in the received data stream of the streaming or broadcast service.

## Patentansprüche

1. Einrichtung (10) zum Auslegen einer Überwachungsvorrichtung (20), wobei die Überwachungsvorrichtung (20) zum Überwachen eines Streaming- oder Broadcastdienstes ausgelegt wird, wobei die Einrichtung (10) Folgendes umfasst:
eine Empfangsvorrichtung (11), die angepasst ist, einen Datenstrom des Streaming- oder Broadcastdienstes zu empfangen;
einen Kanaltypdetektor (12), der angepasst ist, einen Typ des Streaming- oder Broadcastdienstes zu bestimmen, wobei der bestimmte Typ einen Inhalt des Streaming- oder Broadcastdienstes charakterisiert;
eine Analysevorrichtung (13), die angepasst ist, eine Verteilung von mindestens einem Fehlerparameter über eine vorbestimmte Zeitperiode im empfangenen Datenstrom des Streaming oder Broadcastdienstes zu berechnen und auf Basis der berechneten Verteilung des mindestens einen Fehlerparameters über die vorbestimmte Zeitperiode einen Schwellwert für den mindestens einen Fehlerparameter zu bestimmen; und
eine Auslegungsvorrichtung (14), die angepasst ist, eine Auslegung der Überwachungsvorrichtung auf Basis des bestimmten Schwellwerts für den mindestens einen Fehlerparameter und des bestimmten Typs des Streaming- oder Broadcastdienstes einzustellen,
**dadurch gekennzeichnet, dass**
der Kanaltypdetektor (12) angepasst ist, den empfangenen Datenstrom zu analysieren und den Typ des Streaming- oder Broadcastdienstes auf Basis von Daten, die im empfangenen Datenstrom des Streaming- oder Broadcastdienstes beinhaltet sind, zu bestimmen.

2. Einrichtung (10) nach Anspruch 1, wobei der mindestens eine Fehlerparameter einen Fehlerparameter von einem Videostrom, einem Audiostrom und/oder einem Datenstrom, insbesondere einen Datenstrom eines Untertitels und/oder eines Teletextes, umfasst.

3. Einrichtung (10) nach Anspruch 1 oder 2, wobei der mindestens eine Fehlerparameter eine Zeitperiode ohne Änderungen beim Streaming- oder Broadcastdienst umfasst.

4. Einrichtung (10) nach einem der Ansprüche 1 bis 3, wobei die Auslegungsvorrichtung (14) angepasst ist, die Auslegung der Überwachungsvorrichtung (20) auf Basis des berechneten Schwellwerts des mindestens einen Fehlerparameters automatisch einzustellen.

5. Einrichtung (10) nach einem der Ansprüche 1 bis 3, die eine Benutzerschnittstelle (16) umfasst, die angepasst ist, eine Benutzereingabe zum Genehmigen oder Modifizieren des berechneten Schwellwerts des mindestens einen Fehlerparameters zu empfangen.

6. Einrichtung (10) nach einem der Ansprüche 1 bis 5, wobei die Analysevorrichtung (13) angepasst ist, die berechnete Verteilung des mindestens einen Fehlerparameters über die Zeit weiter zu aktualisieren, nachdem eine anfängliche Verteilung des mindestens einen anderen Parameters für die vorbestimmte Zeitperiode berechnet wurde.

7. Einrichtung (10) nach einem der Ansprüche 1 bis 6, wobei die Analysevorrichtung (13) angepasst ist, einen Schwellwert für den mindestens einen Fehlerparameter auf Basis von mehreren Datenströmen eines selben Typs des Streaming- oder Broadcastdienstes zu bestimmen.

8. Einrichtung (10) nach einem der Ansprüche 1 bis 7, die einen Speicher (15) umfasst, der angepasst ist, den bestimmten Schwellwert für den mindestens einen Fehlerparameter in Verbindung mit dem entsprechenden Typ des Streaming- oder Broadcastdienstes zu speichern.

9. Einrichtung (10) nach einem der Ansprüche 1 bis 8, wobei die Auslegungsvorrichtung (14) angepasst ist, die Auslegung der Überwachungsvorrichtung (20) auf Basis eines selben Schwellwerts für einen selben Typ des Streaming- oder Broadcastdienstes einzustellen.

10. Einrichtung (10) nach einem der Ansprüche 1 bis 9, wobei die Auslegungsvorrichtung (14) angepasst ist, die Auslegung der Überwachungsvorrichtung (20) zu modifizieren, wenn sich der Typ des Streaming- oder Broadcastdienstes geändert hat.

11. System (1) zum Überwachen eines Streaming- oder Broadcastdienstes, das Folgendes umfasst:
eine Einrichtung (10) zum Auslegen einer Überwachungsvorrichtung nach einem der Ansprüche 1 bis 10 und
eine Überwachungsvorrichtung (20), die angepasst ist, einen Alarm im empfangenen Datenstrom des Streaming- oder Broadcastdienstes zu detektieren, nachdem ein Fehlerparameter im empfangenen Datenstrom den bestimmten Schwellwert für den mindestens einen Fehlerparameter überschritten hat.

12. System (1) nach Anspruch 11, wobei die Einrichtung (10) zum Auslegen der Überwachungsvorrichtung und die Überwachungsvorrichtung (20) in einem selben Gehäuse angeordnet sind.

13. System (1) nach Anspruch 11, wobei mindestens eine Vorrichtung der Einrichtung (10) zum Auslegen der Überwachungsvorrichtung außerhalb eines Gehäuses der Überwachungsvorrichtung (20) angeordnet ist, wobei sich insbesondere die mindestens eine Vorrichtung in einer Cloud befindet.

14. Verfahren zum Auslegen einer Überwachungsvorrichtung (20), wobei die Überwachungsvorrichtung (20) zum Überwachen eines Streaming- oder Broadcastdienstes ausgelegt wird, wobei das Verfahren Folgendes umfasst:
Empfangen (Sl) eines Datenstroms des Streaming- oder Broadcastdienstes;
Bestimmen (S2) eines Typ des Streaming- oder Broadcastdienstes, wobei der bestimmte Typ einen Inhalt des Streaming- oder Broadcastdienstes charakterisiert;
Berechnen (S3) einer Verteilung von mindestens einem Fehlerparameter über eine vorbestimmte Zeitperiode im empfangenen Datenstrom des Streaming oder Broadcastdienstes;
Bestimmen (S4) eines Schwellwerts für den mindestens einen Fehlerparameter auf Basis der berechneten Verteilung des mindestens einen Fehlerparameters über die vorbestimmte Zeitperiode und
Auslegen (S5) der Überwachungsvorrichtung (20) auf Basis des bestimmten Schwellwerts für den mindestens einen Fehlerparameter und des bestimmten Typs des Streaming- oder Broadcastdienstes,
**dadurch gekennzeichnet, dass**
das Bestimmen (S2) des Typs des Streaming- oder Broadcastdienstes das Analysieren des empfangenen Datenstroms und das Bestimmen des Typs des Streaming- oder Broadcastdienstes auf Basis von Daten, die im empfangenen Datenstrom des Streaming- oder Broadcastdienstes beinhaltet sind, umfasst.

## Revendications

1. Appareil (10) pour configurer un dispositif de surveillance (20), le dispositif de surveillance (20) étant configuré pour surveiller un service de diffusion en continu ou de diffusion, l'appareil (10) comprenant :
un dispositif de réception (11) adapté à recevoir un flux de données du service de diffusion en continu ou de diffusion ;
un détecteur du type à canal (12) adapté à déterminer un type du service de diffusion en continu ou de diffusion, dans lequel le type déterminé caractérise le contenu du service de diffusion en continu ou de diffusion ;
un dispositif d'analyse (13) adapté à calculer une distribution d'au moins un paramètre d'erreur pendant une période prédéterminée dans le courant de données reçu du service de diffusion en continu ou de diffusion, et à déterminer une valeur de seuil pour le au moins un paramètre d'erreur sur la base de la distribution calculée du au moins un paramètre d'erreur pendant la période prédéterminée ; et
un dispositif de configuration (14) adapté à régler une configuration du dispositif de surveillance sur la base de la valeur de seuil déterminée pour le au moins un paramètre d'erreur et le type déterminé du service de diffusion en continu ou de diffusion,
**caractérisé en ce que**
le détecteur du type à canal (12) est adapté à analyser le flux de données reçu et à déterminer le type du service de diffusion en continu ou de diffusion sur la base de données incluses dans le flux de données reçu du service de diffusion en continu ou de diffusion.

2. Appareil (10) selon la revendication 1, dans lequel le au moins un paramètre d'erreur comprend un paramètre d'erreur d'un flux vidéo, d'un flux audio et/ou d'un flux de données, en particulier d'un flux de données d'un sous-titre et/ou d'un télétexte.

3. Appareil (10) selon la revendication 1 ou 2, dans lequel le au moins un paramètre d'erreur comprend une période sans changements du contenu du service de diffusion en continu ou de diffusion.

4. Appareil (10) selon l'une quelconque des revendications 1 à 3, dans lequel le dispositif de configuration (14) est adapté à régler automatiquement la configuration du dispositif de surveillance (20) sur la base de la valeur de seuil calculée du au moins un paramètre d'erreur.

5. Appareil (10) selon l'une quelconque des revendications 1 à 3, comprenant une interface utilisateur (16) adaptée à recevoir une entrée utilisateur pour améliorer ou modifier la valeur de seuil calculée du au moins un paramètre d'erreur.

6. Appareil (10) selon l'une quelconque des revendications 1 à 5, dans lequel le dispositif d'analyse (13) est adapté en outre à mettre à jour la distribution calculée du au moins un paramètre d'erreur au fil du temps après qu'une distribution initiale de l'au moins un autre paramètre a été calculée pendant la période prédéterminée.

7. Appareil (10) selon l'une quelconque des revendications 1 à 6, dans lequel le dispositif d'analyse (13) est adapté à déterminer une valeur de seuil pour le au moins un paramètre d'erreur sur la base de multiples flux de données d'un même type du service de diffusion en continu ou de diffusion.

8. Appareil (10) selon l'une quelconque des revendications 1 à 7, comprenant une mémoire (15) adaptée à mettre en mémoire la valeur de seuil déterminée pour le au moins un paramètre d'erreur en association avec le type correspondant du service de diffusion en continu ou de diffusion.

9. Appareil (10) selon l'une quelconque des revendications 1 à 8, dans lequel le dispositif de configuration (14) est adapté à régler la configuration du dispositif de surveillance (20) sur la base d'une même valeur de seuil pour un même type du service de diffusion en continu ou de diffusion.

10. Appareil (10) selon l'une quelconque des revendications 1 à 9, dans lequel le dispositif de configuration (14) est adapté à modifier la configuration du dispositif de surveillance (20), lorsque le type de service de diffusion en continu ou de diffusion a changé.

11. Système (1) pour surveiller un service de diffusion en continu ou de diffusion, comprenant :
un appareil (10) pour configurer un dispositif de surveillance selon l'une quelconque des revendications 1 à 10, et
un dispositif de surveillance (20) adapté à détecter une alarme dans le flux de données reçu du service de diffusion en continu ou de diffusion lorsqu'un paramètre d'erreur dans le flux de données reçu dépasse la valeur de seuil déterminée pour le au moins un paramètre d'erreur.

12. Système (1) selon la revendication 11, dans lequel l'appareil (10) pour configurer le dispositif de surveillance et le dispositif de surveillance (20) sont agencés dans un même boîtier.

13. Système (1) selon la revendication 11, dans lequel au moins un dispositif de l'appareil (10) pour configurer le dispositif de surveillance est agencé à l'extérieur d'un boîtier du dispositif de surveillance (20), en particulier le au moins un dispositif est situé dans un nuage.

14. Procédé pour configurer un dispositif de surveillance (20), le dispositif de surveillance (20) étant configuré pour surveiller un service de diffusion en continu ou de diffusion, le procédé comprenant :
la réception (S1) d'un flux de données du service de diffusion en continu ou de diffusion ;
la détermination (S2) d'un type du service de diffusion en continu ou de diffusion, dans lequel le type déterminé caractérise le contenu du service de diffusion en continu ou de diffusion ;
le calcul (S3) d'une distribution d'au moins un paramètre d'erreur pendant une période prédéterminée dans le flux de données reçu du service de diffusion en continu ou de diffusion ;
la détermination (S4) d'une valeur de seuil pour le au moins un paramètre d'erreur sur la base de la distribution calculée du au moins un paramètre d'erreur pendant la période prédéterminée ; et
la configuration (S5) du dispositif de surveillance (20) sur la base de la valeur de seuil déterminée pour le au moins un paramètre d'erreur et du type déterminé du service de diffusion en continu ou de diffusion,
**caractérisé en ce que**
la détermination (S2) du type de service de diffusion en continu ou de diffusion comprend l'analyse du flux de données reçu et la détermination du type du service de diffusion en continu ou de diffusion sur la base de données incluses dans le flux de données reçu du service de diffusion en continu ou de diffusion.
